# EUROPEAN PATENT APPLICATION

(11) **EP 2 520 419 A1**
(43) Date of publication of application: **07.11.2012**
(21) Application number: 11164395.3
(22) Date of filing: 02.05.2011
(51) Int. Cl.: B29C 65/06, A47B 95/00

(54) **Friction welding**

(71) Applicant: Lammhults Möbel AB, 360 30 Lammhult (SE)
(72) Inventor: Johnson, Per-Evert, 360 30 Lammhult (SE)
(74) Representative: Simonsson, Erik

(57) **Abstract**

A method of attaching a fitting to a fibrous surface of an item, said fitting (10) having a mounting surface (12) provided with a plurality of thermoplastic spikes (16), said plurality of thermoplastic spikes (16) being distributed over an area of said mounting surface (12), comprises
vibrating said mounting surface (12) against said fibrous surface, such that said fibrous surface is roughed by said thermoplastic spikes (16), thereby forming micropores in said fibrous surface;
while vibrating, pressing said mounting surface (12) and said fibrous surface together, the pressure and vibration causing at least partial melting of at least a portion of said plurality of thermoplastic spikes (16), so as to form a thermoplastic melt;
pressing at least a portion of said thermoplastic melt into said micropores; and
allowing said melt to cool and solidify, so as to form a thermoplastic joint between said mounting surface (12) and said fibrous surface.

## Description

### Field of the invention

The present invention relates to a method of attaching a fitting to a fibrous surface of an item. The invention also relates to a furniture fitting adapted for being attached using said method.

### Background of the invention

Furniture are generally produced by joining a plurality of furniture parts, some of which may be of wood or other fibrous materials. Fittings, such as hinges, connectors for attaching legs, decorative trim and the like are often attached to wooden parts using screws or dowels. However, such joints result in highly localized load concentrations at the joints. Furthermore, such joints are not suitable for highly porous and/or thin materials. When there is a need to preserve the integrity and strength of the objects to be joined, a non-intrusive joint is needed, such as a glue joint.

US patent 6,843,529 discloses a chair having a plywood seat; connecting plates for holding chair legs are glued into recesses of the plywood seat. A problem with the chair of US 6,843,529 is that the recesses reduce the strength of the plywood seat.

### Summary of the invention

It is an object of the present invention to solve, or at least mitigate, parts or all of the above mentioned problems. To this end, there is provided a method of attaching a fitting to a fibrous surface of an item, said fitting having a mounting surface provided with a plurality of thermoplastic spikes, said plurality of thermoplastic spikes being distributed over an area of said mounting surface, the method comprising vibrating said mounting surface against said fibrous surface, such that said fibrous surface is roughed by said thermoplastic spikes, thereby forming micropores in said fibrous surface; while vibrating, pressing said mounting surface and said fibrous surface together, the pressure and vibration causing at least partial melting of at least a portion of said plurality of thermoplastic spikes, so as to form a thermoplastic melt; pressing at least a portion of said thermoplastic melt into said micropores; and allowing said melt to cool and solidify, so as to form a thermoplastic joint between said mounting surface and said fibrous surface. Such a method non-intrusively joins the fitting with the fibrous surface, such that the structural integrity of the item is maintained. The method is therefore well suited also for thin sheets of fibrous material. A strong joint may be obtained without the drawbacks of glueing, such as environmental and working environment issues, spillage, long curing times etc.

According to an embodiment, said vibration is performed by a linear or orbital motion. Thereby, a more uniform strength of the joint may be obtained compared to e.g. angular vibration. Furthermore, a purely linear or orbital motion increases the surface penetration of the roughing, since each spike will repeatedly follow the same trace, resulting in an increased strength of the joint.

According to an embodiment, said mounting surface is vibrated against said fibrous surface at a vibration amplitude of between 0.2 mm and 3 mm. Thereby, a good balance between the level of roughing and the surface coverage of the joint is obtained.

According to an embodiment, said mounting surface is vibrated against said fibrous surface at a frequency of between 100 and 500 Hz. This gives a suitable balance between on one hand process speed, and on the other allowing the fibrous surface to be roughed without too quickly melting the spikes.

According to an embodiment, during said roughing, said thermoplastic spikes penetrate less than 0.5 mm, and more preferably, less than 0.2 mm, into said fibrous surface.

According to an embodiment, said fibrous surface is a wooden surface.

According to an embodiment, said fitting is a furniture fitting, said item is a furniture component, and said method is a method of forming a furniture /sub-/assembly.

According to another aspect, parts or all of the above mentioned problems are solved, or at least mitigated, by a furniture fitting, comprising a mounting surface for friction welding to a fibrous surface of a furniture item, said furniture fitting comprising a plurality of thermoplastic roughing spikes, distributed over an area of said mounting surface, for simultaneous roughing of and welding to said fibrous surface.

According to an embodiment, said thermoplastic spikes are essentially uniformly distributed over said mounting surface. Thereby, a more uniform joint strength may be obtained over the entire joint area, which allows for keeping the intrusiveness of the roughing at a minimum.

According to an embodiment, said thermoplastic spikes are of substantially the same height. Again this provides for a more uniform joint strength over the entire joint area.

According to an embodiment, each thermoplastic spike of said plurality of thermoplastic spikes has a tip ending in an apex; a base; and a monotonically decreasing width from its base to its apex. Such a design offers a good resistance to the shear forces induced by lateral vibration along the fibrous surface of the furniture item, such that the spikes do not flex substantially when vibrated; at the same time, the apex forms a sharp tip of the spike for efficient roughing.

According to an embodiment, each thermoplastic spike of said plurality of thermoplastic spikes has the shape of a cone or a pyramid.

According to an embodiment, each thermoplastic spike of said plurality of thermoplastic spikes has a height of between 0.2 and 4 mm. This range offers a suitable balance between sufficient adhesion and structural integrity.

According to an embodiment, each thermoplastic spike of said plurality of thermoplastic spikes has an average slope, from its base to its tip, of less than 80°. Thereby, the spikes will suffer a relatively low degree of flexing when vibrating, such that the roughing will be more efficient.

According to an embodiment, each thermoplastic spike of said plurality of thermoplastic spikes has a tip with an apex angle of between 10° and 120°.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:

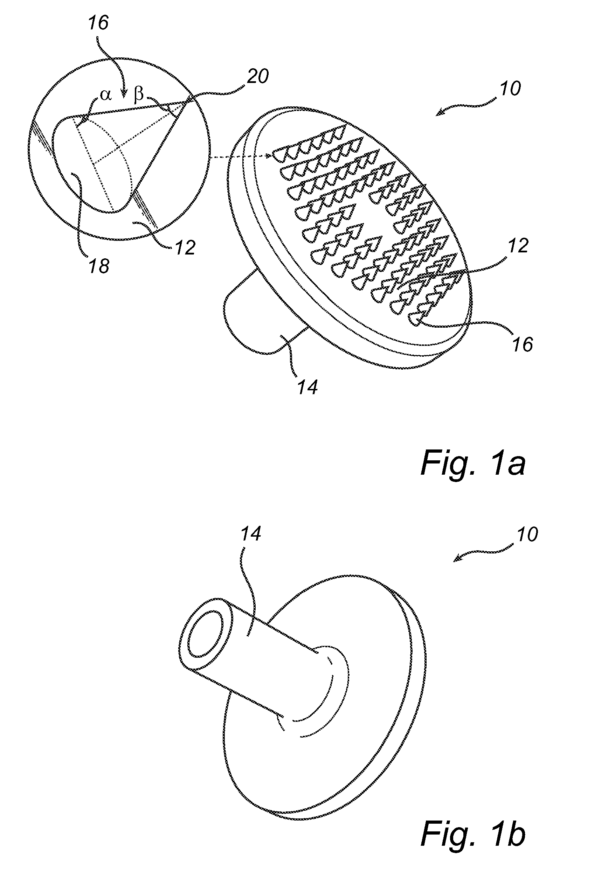

Fig. 1 a is a diagrammatic view in perspective of a furniture fitting for friction welding to a fibrous surface;
Fig. 1 b is a diagrammatic view in perspective of the furniture fitting of Fig. 1 a, as seen from another angle;
Figs 2a-c are schematic sectional views in perspective illustrating friction welding process steps for attaching the furniture fitting of Figs 1 a-c to a fibrous surface; and
Fig. 3 is a schematic sectional view in perspective illustrating the joint between the furniture fitting of Figs 1a-b, 2a-c, and the fibrous surface.

### Detailed description of the exemplary embodiments

Figs 1 a-b illustrate, from two different angles, a thermoplastic furniture fitting 10 adapted for being non-intrusively attached to a fibrous surface of a piece of furniture, such as a chair or a table. The fibrous surface may, by way of example, be a wooden surface of a veneered object, or the surface of a solid wooden object. Alternatively, the fibrous surface may be the surface of an object of e.g. chipboard, plywood, or MDF (Medium Density Fiberboard). As will be further elucidated below, the fibrous surface may typically be painted or lacquered without significantly affecting the method of attaching the fitting, or the resulting joint strength.

The furniture fitting 10 comprises a mounting surface 12, for friction welding to said fibrous surface, and a stem 14 adapted for being connected to e.g. a tubular chair- or table leg in a non-illustrated manner. The stem14 may also serve for holding the fitting 10 in the vibratory workpiece holder of a machine for friction welding.

The mounting surface 12 is provided with a plurality of thermoplastic spikes 16, which are integral with the mounting surface 12. In fact, the entire fitting 10 with the spikes 16 may be formed by a thermoplastic material, such as polyamide or acrylonitrile-butadiene-styrene, by e.g., injection moulding. The thermoplastic spikes 16 are distributed uniformly over the mounting surface 12. Preferably, the mounting surface 14 should be provided with a thermoplastic spike density of at least three spikes per cm² in order to warrant an optimal adhesion with a minimum of intrusion. Referring to the magnified area in Fig. 1 a, illustrating a single spike 16, each spike 16 has the shape of a cone having a base 18, and a sharp tip 20 pointing away from the mounting surface 12. The conical surface of the spike 16 has a slope α, from the base 18 to the tip 20 of the spike 16, of about 70°. In the special case of a cone, the slope α is constant; therefore, also the average spike slope, from the base 18 to the tip 20, is about 70°. The tip 20 forms an apex angle β of about 40°.

All thermoplastic spikes 16 have the same height, i.e. the apexes of all spikes 16 are located in a plane, such that, when pressing the mounting surface 14 of the fitting 10 against a fibrous surface, all spikes 16 will contact the fibrous surface. From its base 18 to its tip 20, each spike 16 extends to a height of about 2 mm.

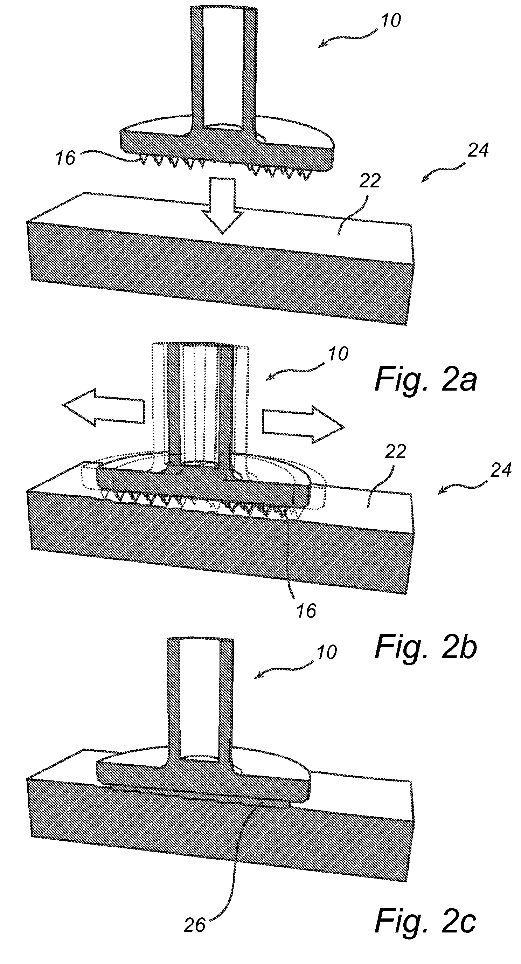

Turning now to Figs 2a-c, a method of attaching the fitting 10 onto a fibrous surface will be described. Fig. 2a illustrates how the mounting surface 12 of the fitting 10 is brought into abutment with a surface 22 of a furniture part 24 of solid wood, such that the fitting 10 rests upon the surface 22 via the spikes 16. The surface 22 may, by way of example, be a bottom surface of a wooden chair seat or table top.

As illustrated by arrows in fig. 2b, the fitting 10 is linearly vibrated along the surface 22 of the furniture part 24. The vibration may, by way of example, typically have a frequency of about 100-300 Hz, and an amplitude of about 1-3 mm. While vibrating, the fitting 10 is pressed onto the surface 22, such that the surface 22 is roughed by the sharp apexes 20 of the spikes 16. The roughing forms microscopic surface structures and pores, such structures and pores in this disclosure collectively being termed micropores, in the fibrous surface 22 of the furniture part 24. After a short period of time, typically of the order 100 milliseconds to 15 seconds, the tips 20 (Fig. 1) of the spikes 16 will start to melt due to the friction between the tips 20 and the surface 22. Typically, the spikes 16 will only penetrate into the surface 22 by fractions of a millimeter before they start to melt, but, depending on the selection of the thermoplastic material, and in particular its melting point, the roughing may extend to a depth of up to 2 mm into the surface 22. The vibration may be initiated before or after the fitting 10 has been brought into abutment with the surface 22 of the furniture part 24.

Pressure may be maintained, or even increased, for a short period of time after the spikes have begun to melt, typically 100 millisecond to 15 seconds, such that molten plastic will be pressed into the micropores formed in the surface 22 by the spikes 16. Also vibration may be maintained for a short period of time after the spikes 16 have begun to melt, typically 100 milliseconds to 10 seconds, so as to provide a sufficient amount of plastic melt for pressing into the micropores, and to maintain plastic in molten state long enough to be pressed into the micropores.

The vibration is stopped, and pressure is maintained until the thermoplastic melt, formed by the molten spikes 16, is solidified to form a thermoplastic joint layer 26. The resulting solid thermoplastic joint layer 26 is integral with the thermoplastic mounting surface 12, and extends into the micropores of the fibrous surface 22; thereby, it forms a strong joint between the fibrous surface 22 and the fitting 10.

Thanks to the roughing described with reference to fig. 2b, the fibrous surface may be priorly provided with a finishing layer, such as paint or lacquer, without significantly affecting the method of attaching the fitting or the resulting joint strength. The reason for this is that the roughing may penetrate through such a finishing layer, and create micropores in the fibrous surface therebelow. Thereby, the entire fabrication process may be simplified, since the furniture parts may be finished, e.g. painted, separately before assembly, without requiring masking of adhesion surfaces during the application of the finishing layer. Compared to glueing, the process described with reference to Figs 2a-b also allows for a shortened joining time.

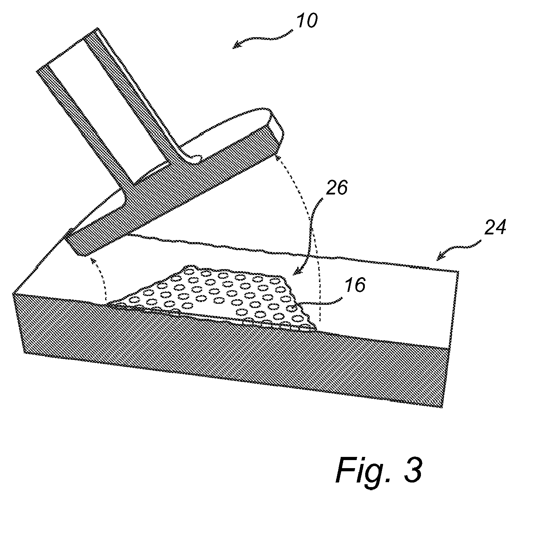

Fig. 3 illustrates a section, parallel to the fibrous surface 22, through the joint 26. The solidified thermoplastic melt is spread over most of the mounting surface 12 (Fig. 1a), and fills any gaps between what remains of the spikes 16. A difference in the material structure of the joint 26 may be visible due to the fact that part of the material in the joint region has been melted and re-solidified, while a portion of the spikes 16 adjacent to the base 18 may have remained solid, without melting, throughout the entire attachment process. Hence, as is apparent in fig. 3, it is not necessary that, in the attachment process, the entire spikes 16 melt to form the joint; a partial melting may be sufficient to create a strong bond with the micropores formed during roughing.

The invention has mainly been described above with reference to a few embodiments. However, as is readily appreciated by a person skilled in the art, other embodiments than the ones disclosed above are equally possible within the scope of the invention, as defined by the appended patent claims.

For example, the invention is not limited to any particular vibration pattern; vibration may occur in any direction and follow any path. Furthermore, the vibration is not limited to any particular amplitude or frequency. By way of example, mechanical vibration may also be at ultrasonic frequency, i.e. at a frequency exceeding 20 kHz.

Depending on the desired melting point, joint strength, and roughing depth, various thermoplastic materials may be used for the tips 20 as will be appreciated by those skilled in the art. Moreover, the fitting 10 need not be an integral, thermoplastic component. Instead, it may be formed as a composite component, e.g. as a piece of wood trim having a wooden mounting surface provided with thermoplastic spikes 16.

## Claims

1. A method of attaching a fitting to a fibrous surface of an item, said fitting (10) having a mounting surface (12) provided with a plurality of thermoplastic spikes (16), said plurality of thermoplastic spikes (16) being distributed over an area of said mounting surface (12), the method comprising
vibrating said mounting surface (12) against said fibrous surface (22), such that said fibrous surface (22) is roughed by said thermoplastic spikes (16), thereby forming micropores in said fibrous surface (22);
while vibrating, pressing said mounting surface (12) and said fibrous surface (22) together, the pressure and vibration causing at least partial melting of at least a portion of said plurality of thermoplastic spikes (16), so as to form a thermoplastic melt;
pressing at least a portion of said thermoplastic melt into said micropores; and
allowing said melt to cool and solidify, so as to form a thermoplastic joint (26) between said mounting surface (12) and said fibrous surface (22).

2. The method of claim 1, wherein said vibration is performed by a linear or orbital motion.

3. The method of any of the previous claims, wherein said mounting surface (12) is vibrated against said fibrous surface (22) at a vibration amplitude of between 0.2 mm and 3 mm.

4. The method of any of the previous claims, wherein said mounting surface (12) is vibrated against said fibrous surface (22) at a frequency of between 100 and 500 Hz.

5. The method of any of the previous claims, wherein, during said roughing, said thermoplastic spikes (16) penetrate less than 0.5 mm into said fibrous surface (22).

6. A method according to any of the previous claims, wherein said fibrous surface (22) is a wooden surface.

7. The method of any of the previous claims, said fitting (10) being a furniture fitting, said item (24) being a furniture component, and said method being a method of forming a furniture /sub-/assembly.

8. A furniture fitting, comprising a mounting surface (12) for friction welding to a fibrous surface (22) of a furniture item (24), said furniture fitting (10) comprising a plurality of thermoplastic roughing spikes (16), distributed over an area of said mounting surface (12), for simultaneous roughing of and welding to said fibrous surface (22).

9. The furniture fitting according to claim 8, said thermoplastic spikes (10) being essentially uniformly distributed over said mounting surface (12).

10. The furniture fitting of any of the claims 8-9, said thermoplastic spikes (16) being of substantially the same height.

11. The furniture fitting of any of the claims 8-10, each thermoplastic spike (16) of said plurality of thermoplastic spikes (16) having a tip (20) ending in an apex; a base (18); and a monotonically decreasing width from its base (18) to its apex (20).

12. The furniture fitting of any of the claims 8-11, each thermoplastic spike (16) of said plurality of thermoplastic spikes (16) having the shape of a cone or a pyramid.

13. The furniture fitting of any of the claims 8-12, each thermoplastic spike (16) of said plurality of thermoplastic spikes (16) having a height of between 0.2 and 4 mm.

14. The furniture fitting of any of the claims 8-13, each thermoplastic spike (16) of said plurality of thermoplastic spikes (16) having an average slope (α), from its base (18) to its tip (20), of less than 80°.

15. The furniture fitting of any of the claims 8-14, each thermoplastic spike (16) of said plurality of thermoplastic spikes (16) having a tip (20) with an apex angle (β) of between 10° and 120°.
